# EUROPEAN PATENT SPECIFICATION

(11) **EP 1 913 708 B1**
(45) Date of publication and mention of the grant of the patent: **19.06.2013**
(21) Application number: 06836719.2
(22) Date of filing: 30.10.2006
(51) Int. Cl.: G10L 19/00, H04R 5/02, H04B 3/20, H04R 29/00

(54) **DETERMINATION OF AUDIO DEVICE QUALITY**
FESTSTELLUNG DER QUALITÄT EINES AUDIOGERÄTS
DETERMINATION DE LA QUALITE D'UN DISPOSITIF AUDIO

(30) Priority: 17.11.2005 US 280999
(43) Date of publication of application: 23.04.2008
(73) Proprietor: Microsoft Corporation, Redmond, WA 98052-6399 (US)
(72) Inventor: KRANTZ, Anton, W., Redmond, WA 98052-6399 (US); LOONEY, William, L., Redmond, WA 98052-6399 (US)
(74) Representative: Grünecker, Kinkeldey, Stockmair & Schwanhäusser
(86) International application number: PCT/US2006/042506
(87) International publication number: WO 2007/061584

(56) References cited:
- EP-A- 1 229 747
- EP-A1- 1 578 169
- WO-A-00/56119
- GB-A- 2 327 012
- JP-A- 06 066 625
- US-A- 4 191 864
- US-A- 4 788 708
- US-A- 5 347 586
- US-A1- 2003 055 608
- US-B1- 6 760 451
- US-B1- 6 823 302
- US-B2- 6 671 643
- DAVY ET AL: "The variance of reverberation time measurements due to loudspeaker position variation" JOURNAL OF SOUND & VIBRATION, LONDON, GB, vol. 132, no. 3, 8 August 1989 (1989-08-08), pages 403-409, XP022751719 ISSN: 0022-460X [retrieved on 1989-08-08]

## Description

### Background

Real-time communication using network-connected computing devices is becoming increasingly popular. This may take the form of, for example, voice over Internet protocol (VOIP) telephony, audio-enabled chat programs, web video-conferencing, and audio and video streaming. Providing the highest quality audio and/or video experience can be a key differentiator among the many companies providing real-time communication audio clients. In many instances a user may have multiple audio devices that are capable of being used for a communication session. A real-time audio client typically requires a user to select and configure the audio devices to use for making a call. However, the audio client does not guarantee that the audio devices selected will result in a quality communication experience or even indicate whether the selected devices provide the best configuration option.

US 6 760 451 B1 relates to a prefilter for an audio system comprising a loudspeaker in a room, which corrects both amplitude and phase errors due to the loudspeaker. A test signal generator generates a signal comprising a periodic frequency sweep with a greater phase repetition period than the frequency repetition period. A microphone positioned at various points in the room measures the audio signal processed by the room and loudspeaker, and a coefficient calculator derives the signal response of the room. When using a single impulse as a test signal, the signal measured by the microphone directly yields the impulse response of the loudspeaker. If other test signals are used, it is necessary to derive the impulse response of the loudspeaker from the measured signal by deconvolving the test signal response from the measured response. In principle, the test signal generator could generate any type of signal having a predetermined response or transfer function, and the response measured at the microphone could be divided by the signal response to yield the response of the loudspeaker room path: One way of providing a test signal generator is to provide, in successive addresses of read only memory, the successive signal values stored in digital form to be output as successive time samples. The known technique of noise cancellation employs a loudspeaker and a microphone positioned in close proximity. The microphone receives sound representing the sound incident upon the loudspeaker, and a processing or filtering circuit produces a signal supplied to the loudspeaker which is in antiphase to the signal incident upon the microphone, so that the loudspeaker signal cancels the incident signal. The first step is to measure the impulse response from each of the loudspeakers to each of the microphones. This is achieved by generating a test signal through each of the loudspeakers in turn, and digitizing and storing the signal received from each of the microphones over a relatively long period. The impulse responses R and T have already been measured. By using the actual impulse responses devised from the microphones, the coefficient calculator derives the values of the impulse responses of the filters, which result in the lowest squared amplitude of the signals which would arise at the microphone positions and hence the lowest amount of audio energy in the room. Since it is desired to reduce the later parts of the envelope so as to reduce the decaying tail of the reverberation, the filter coefficients may be calculated in such a way that minimizing the amplitude of these later portions of the reverberation is given greater weight than minimizing the earlier portions.

US 6 671 643 B2 relates to a method and system for testing a hearing aid, having at least one microphone, one signal processing unit and one sound transducer, wherein a sound channel is produced between the microphone and the sound transducer. The electrical signal path in the hearing aid is interrupted, and a test signal is fed into the interrupted signal path within the hearing aid, is emitted via the sound transducer, and is passed on through the sound channel to the microphone. The signal received by the microphone is then evaluated.

The information included in this Background section of the specification is included for technical reference purposes only and is not to be regarded subject matter by which the scope of the invention is to be bound.

### Summary

The object of the present invention is to provide automatic detection of the quality of particular audio output or input devices, or combinations thereof, in a computer system.

This object is solved by the subject matter of the independent claims.

Embodiments are given in the dependent claims.

A model sample audio file stored in memory on the computing device is played through a loudspeaker output device connected with the computer system. The sound generated thereby is captured and transduced by a microphone input device connected with the computer system to create a captured audio signal for recording and processing by the computer system. The captured audio signal is correlated with the sample audio signal to determine the fidelity of the captured audio signal.

An algorithm for correlation of the captured audio signal with the sample audio signal may consider, for example, one or more of the following factors when comparing the captured audio signal with the sample audio signal: the comparative energy level or intensity, the range of frequencies present, the level of distortion, and the signal-to-noise ratio. Other audio quality factors may additionally or alternately be used to calculate the comparative audio quality between the sample audio signal and the captured audio signal. A device quality score may be computed to provide a user a simple indication of relative merit between different audio device configurations. An optimal pair of audio input and output devices may be automatically selected by the computer system after automatically comparing all of the potential device combinations and activating the configuration having the highest device quality score.

In some implementations, articles of manufacture are provided as computer program products. One implementation of a computer program product provides a computer program storage medium readable by a computer system and encoding a computer program. Another implementation of a computer program product may be provided in a computer data signal embodied in a carrier wave by a computer system and encoding the computer program. This Summary is provided to introduce a selection of concepts in a simplified form that are further described below in the Detailed Description. Other features, details, utilities, and advantages of the claimed subject matter will be apparent from the following more particular written Detailed Description of various embodiments and implementations as further illustrated in the accompanying drawings and defined in the appended claims.

### Brief Descriptions of the Drawings

Fig. 1 depicts an exemplary personal computer system with a plurality of attached audio devices.

Fig. 2 illustrates exemplary modules in a computer system for determining quality of audio device configurations.

Fig. 3 illustrates a series of exemplary operations performed by the modules to determine audio device quality.

Fig. 4 illustrates another series of exemplary operations performed to determine an audio device quality score.

Fig. 5 illustrates an exemplary computer system for conducting real-time communication sessions and other audio input and output functions.

### Detailed Descriptions

An implementation of the technology described herein provides for the automatic determination of the quality of audio device configurations associate with a computer system. This technology aids a user of a computer system conducting real-time communication sessions and other audio environment sessions to ensure that the devices selected to conduct such sessions comprise the best possible audio quality configuration. For example, when conducting an audio conference, e.g., a VOIP telephone call using a personal computer system, both an audio input device, e.g., a microphone, and an audio output device, e.g., one or more loudspeakers, are necessary to conduct the communication session. If either or both of the selected microphone and loudspeakers are not configured properly or work poorly in combination, a user may have a frustrating communication experience because of poor audio quality. The systems and methods described herein function as an automatic aid to a user of the computer system to provide information about optimal configurations of audio input and output devices in order to maximize the quality of the audio experience during the communication session.

The user of a computer system may be confronted with a variety of optional audio devices that could be used for the communication session. For example, the computer system may have any one or more of a built-in microphone, a display with a built-in microphone, a web camera with a built-in microphone, a VOIP telephone with a handset and speakerphone options, a headset with a microphone and headphone, built-in loudspeakers, a display with built-in loudspeakers, external loudspeakers, and a connection with a separate home audio system with loudspeakers.

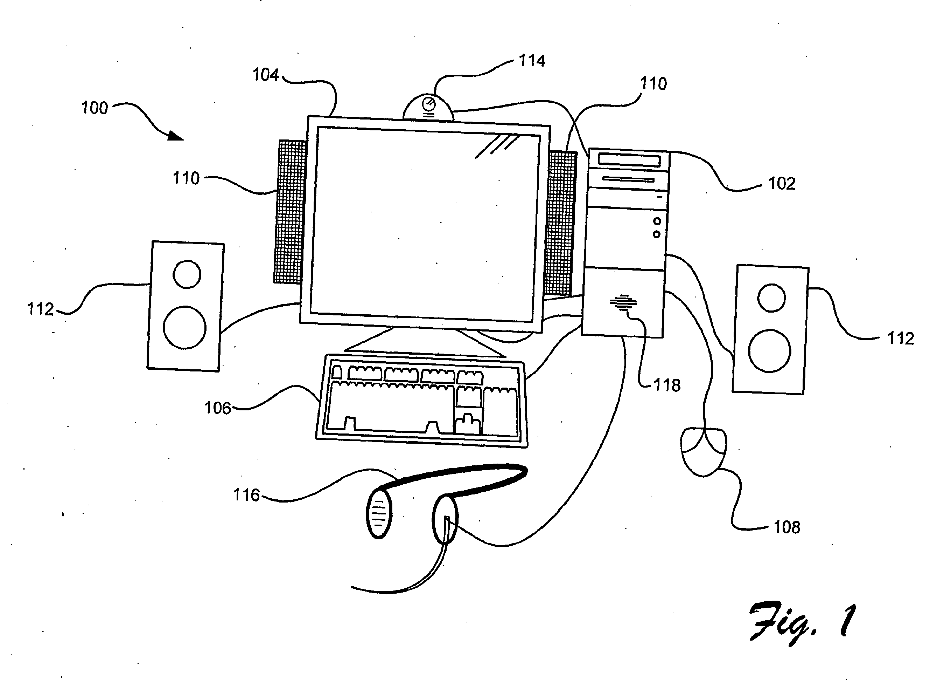

For example, Fig. 1 depicts an exemplary personal computer system 100 equipped with a variety of audio peripheral devices. A typical personal computer system 100 may include a computer 102 and a video monitor 104, a keyboard 106, and a mouse 108 connected to the computer 102. The computer 102 may have a built-in loudspeaker 118 for producing sound. The video monitor 104 may also be equipped with a pair of loudspeakers 110. Further, the user of the personal computer system 100 may also attach a set of external loudspeakers 112 to the computer 102. The personal computer system 100 may also include a combination of video camera and microphone 114 for conducting Internet video conferences. The user may also attach a headset 116 that combines earphone loudspeakers and a microphone for participating in VOIP or Internet video conferences.

In an exemplary audio configuration, the computer system may automatically select and activate the best configuration of devices for the desired audio session. A sample audio file may be output through a loudspeaker device connected with the computer system. The sample audio file may be stored in memory associated with the computer system or may be accessed from a remote computer system over a network. The sample audio file may be transformed into an analog signal and transmitted to the loudspeaker. Alternatively, an audio signal could be generated contemporaneously according to an instruction set. In an instance where the loudspeaker is digital, i.e., the loudspeaker has an analog-to-digital converter, the sample audio file may be transmitted directly to the loudspeaker. The loudspeaker transduces the analog audio signal to acoustic energy to create sound waves in the atmosphere.

A test is performed to record sounds received by the microphone during the same time period that the sample audio file is played by the loudspeaker. Any sound waves, including sound corresponding to the sample audio file, are picked up by the microphone and likewise transduced into an analog audio signal. The analog audio signal is transformed by the computer system into a digital data format. Alternatively, in the case of a digital microphone, the sound waves may be immediately converted into a digital signal for input to the computer.

The audio data captured by the microphone and the sample audio file are converted into a common data format if necessary. The audio data from the captured sounds is then compared with the audio data from the model audio sample file to determine the overall quality and fidelity of the captured audio data. An algorithm for correlation of the captured audio data with the model audio sample may compare several factors including, for example, the comparative energy level or intensity, the range of frequencies present, the level of distortion, and the signal-to-noise ratio. A device quality score may be computed based upon these factors to provide a user a simple indication of the quality of the audio device configuration.

An optimal pair of audio input and output devices may be automatically selected by the computer system after automatically comparing all of the potential device combinations and activating the configuration having the highest device quality score. Alternatively, the quality of audio devices, e.g., microphones and loudspeakers, connected with the computer system may be determined and reported to a user. The user may then manually select another configuration of audio devices for testing and ultimately select the best configuration for the audio session based upon the respective quality scores.

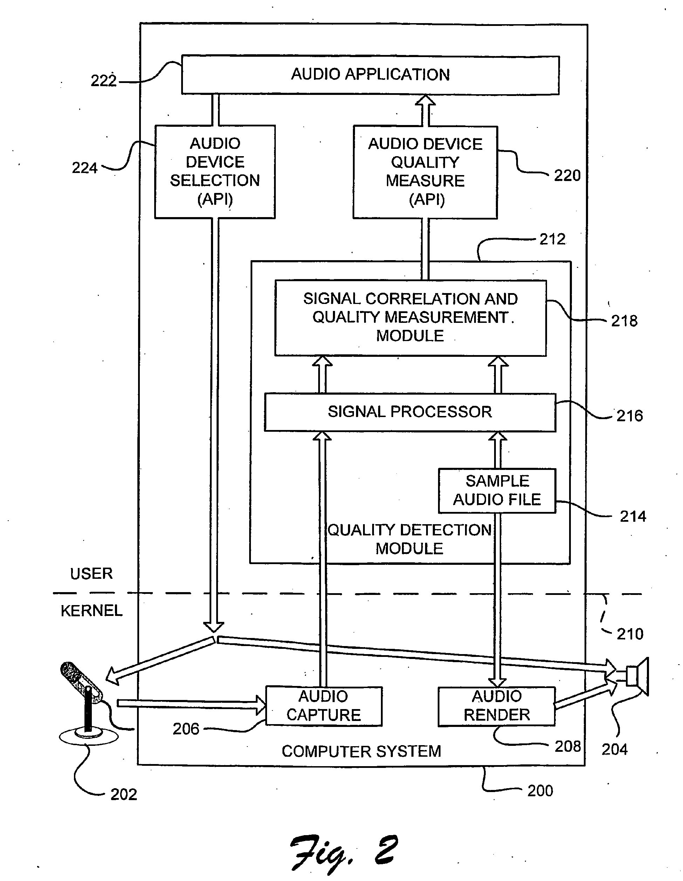

An exemplary computer system 200 with components and modules for implementing the quality determination technology is depicted in Fig. 2. Two exemplary peripheral devices, a microphone 202 and a loudspeaker 204, are connected with the computer system 200. The microphone 202 may be connected to the computer system 200 as an input device to an audio capture module 206. The loudspeaker 204 may be connected to the computer system 200 as an output device to an audio rendering module 208.

The microphone 202 may be a hardware device internal to the computer system 200 or an external device connected to the computer system 200 via a wired or wireless connection. Similarly, the loudspeaker 204 may be a hardware device internal to the computer system 200 or an external device connected to the computer system 200 via a wired or wireless connection. The loudspeaker 204 may be a single speaker, a pair of speakers, or a system of a plurality of speakers, for example, in a "surround sound" configuration. Alternatively, the microphone 202 and loudspeaker 204 may be combined in a single device, for example, a telephone handset or a headset.

As shown in Fig. 2, the automatic device configuration detection functionality is implemented by a combination of resource and instruction levels of the computer system 200, for example, with resources in both a kernel and a user-mode of the computer system 200 as indicated by the dashed line 210. In other operating systems and computing environments, such components and modules may be controlled at other levels of the software architecture. The kernel manages the machine's hardware resources, including the processor, the memory, and low-level hardware interfaces, and controls the way other software components, for example, user-mode components, can access these resources, for example, through device drivers, memory management routines, the scheduler, and system calls.

The audio capture module 206 and the audio render module 208 both reside in the kernel. The audio capture module 206 converts analog audio signals transduced by the microphone 202 from sound waves into digital data signals, e.g., pulse code modulated (PCM), compact disc raw (CDR) data or other common data formats, for further processing by the computer system 200. The PCM data may be of various qualities, for example, PCM 16, PCM 32, or PCM 48. The audio rendering module 208 converts digital audio files, for example, in waveform audio (WAV), MPEG1, digital sound module (DSM) format, or other common data formats, into analog audio signals for acoustic transduction by the loudspeaker 204.

Additional functionality is implemented in the user-mode as software processing routines that operate on the audio data received by the microphone 202 and the audio capture module 206, as well as other data. A quality detection module 212 includes a sample audio file 214, a signal processor 216, and a signal correlation and quality management module 218. The sample audio file 214 may be accessed by operations performed by the quality detection module 212 and transmitted to either or both the audio rendering module 208 and the signal processor 216. The sample audio file 214 is transmitted to the audio rendering module 208 as a model audio sample for output to the loudspeaker 204 in order to conduct the quality configuration test of the loudspeaker 204 and microphone 202.

The sample audio file 214 may be a digital audio file, e.g., a WAV file, that is chosen for attributes of the sound produced. For example, the sample audio file 214 may produce a sound that includes a particular range of frequencies that are easy to detect through the microphone 202 or that would provide a good indication of frequency response of the loudspeaker 204 and microphone 202 combination. The sample audio file 214 may additionally be chosen to generate a sound pleasing to hear by a user, for example, a musical sequence, or provide information valuable to the user, for example, configuration instructions or an advertisement.

Audio signals received from the microphone 202 are also transmitted from the audio capture module 206 to the signal processor 216. Either or both of the audio signals from the audio capture module 206 and the sample audio file 214 may be processed by the signal processor 216 in order to transform the audio signals into a common data format for purposes of comparison of the audio signals. Audio signals (and other digital data signals) may be converted to and stored in any format. For example, if the audio signal from the audio capture module 206 is in PCM format and the audio sample file 214 is in WAV format, the audio sample file 214 may be converted by the signal processor 216 into PCM format. Alternately, the audio signal from the audio capture module 206 may be converted by the signal processor into a WAV format. In yet another instance, both the audio signal from the audio capture module 206 and the audio sample file 214 may be transformed by the signal processor 216 into a third format, e.g., audio interchange file format (AIFF), in the event that such a format would aid in further processing by the quality detection module 212.

Once either or both of the audio signal from the audio capture module 206 and the sample audio file 214 are processed by the signal processor 216, the captured audio signal is compared with the sample audio file 214 by the signal correlation and quality measurement module 218 to determine a quality measurement value. Comparison of the audio signal from the audio capture module 206 with the sample audio file 214 is desirable to determine an objective measure of the quality of the audio device configuration.

Preliminary to a quality evaluation, the signal correlation and quality measurement module 218 may discern whether the sounds picked up by the microphone 202 were generated by the loudspeaker 204 or were merely ambient sounds of the environment in which the microphone 202 is located. This signal correlation function seeks to compare windows or snapshots of the captured audio signal from the microphone 202 on a continuous basis to identify reasonable correlations between the captured audio signal and the sample audio file 214 to ensure correlated audio data is compared.

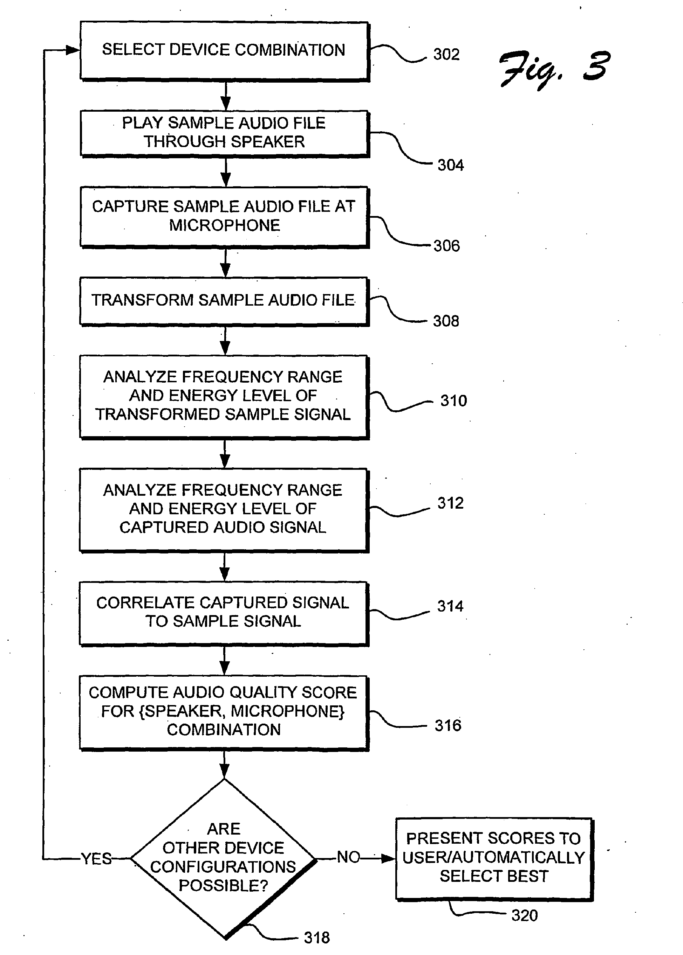

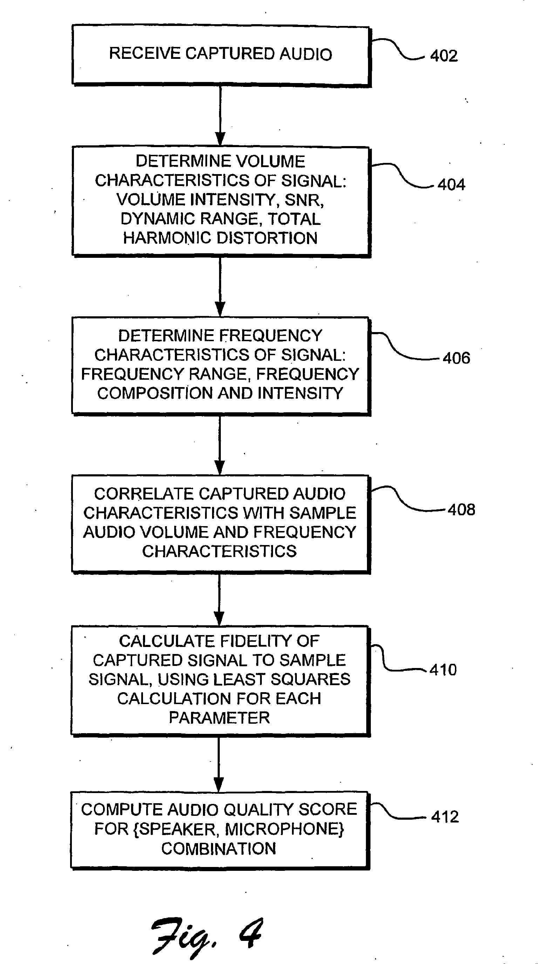

The signal correlation function may be aided by capturing and recording an audio signal from the microphone 202 during a particular window of time that corresponds to the period of time during which the sample audio file 214 is played by the loudspeaker 204. Thus, the signal correlation and quality measurement module 218 compares characteristics, for example, frequency, intensity, and timing, of the data corresponding to the audio signal from the audio capture module 206 with the data from the audio sample file 214 to determine whether there is a match in the data. If the data do correlate, the signal correlation and quality measurement module 218 conducts a quality analysis of the captured data and generates a quality score for the particular audio device configuration as further described herein with respect to Figs. 3 and 4.

As shown in Fig. 2, the computer system 200 also includes an audio application 222 operating within the user-mode. The audio application 222 may be a software program instantiated by the user that will control the input and output devices being configured, e.g., the microphone 202 and the loudspeaker 204. Exemplary audio applications may be a VOIP client and an audio-enabled chat program. Alternately, the audio application 222 may merely be an audio device configuration program, e.g., a "wizard" program instantiated to install a new audio device or optimize the features of a previously installed audio device.

An "audio device quality measure" 220 application program interface (API) acts as an interface between the signal correlation and quality measurement module 218 in the quality detection module 212 to transfer data with configuration quality scores to the audio application 222. The audio application 222 may use the data from the audio device quality measure API 220 to communicate information about the audio device configuration to the user. For example, if the indication is that intensity of the sound generated by the loudspeaker 204 and captured at the microphone 202 is weak, the audio application 222 may alert the user to troubleshoot the loudspeaker 204, e.g., by increasing the volume output on the loudspeaker 204 or by moving the Alternately, the audio application 222 may recommend that the user selects another loudspeaker option, e.g., switch from an external loudspeaker set to alternative loudspeakers built-in to an attached monitor, to determine whether the alternative speakers result in better quality. In one exemplary form, the audio application 222 may provide an alert to the user through a message in a graphical user interface (GUI) (e.g., a "pop-up" window may be presented on the display monitor).

A second API, an audio device selection API 224 also interfaces with the audio application 222 and further with the input and output ports through which the microphone 202 and the loudspeaker 204 are connected to the computer system 200. (Although not depicted in Fig. 2, the audio application 222 may additionally interface with the audio rendering module 208 with a separate API to produce the sound from the communication session conducted by the audio application 222 (e.g., a VOIP telephone call) on the loudspeaker 204). The audio device selection API 224 activates the input port or output port connected with the chosen microphone 202 and loudspeaker 204 configuration. For example, a user's computer system 200 may have a plurality of microphones 202, for example, a first microphone integrated into a display monitor and a second microphone integrated into a web camera, and a plurality of loudspeakers 204, for example, a first set of loudspeakers wired to the computer system 200 and a second set of loudspeakers integrated into the display monitor.

The audio application 222 may ask the user which microphone and set of loudspeakers the user would like to use for audio communication purposes. The audio application 222, through the audio device selection API 224, would open and close appropriate data ports to activate the desired microphone 202 and loudspeaker 204 combination. The audio application 222 may further invoke the audio device selection API 224 to automatically cycle through any available devices connected with the computer system 200 to locate an audio device configuration with the highest quality score.

An exemplary series of operations performed by a computer system to perform the automatic quality detection functions is depicted in Fig. 3. In the context of the exemplary configuration of the computer system 200 of Fig. 2, the signal correlation and quality measurement module is configured to determine an objective quality rating for each possible microphone/loudspeaker configuration connected with the computer system. While described in the context of the computer system of Fig. 2, it should be understood that the operations described herein may be performed by systems other than computer system 200. Further, any of the operations described may be performed by hardware, software, firmware, or any combination thereof.

Initially, in a selection operation 302, the audio application either automatically selects or prompts the user to select an initial audio device configuration for use in an audio session, e.g., an audio communication session. Such a prompt or request may be presented through a GUI message on a display monitor. Once the configuration is selected, a play operation 304 causes the sample audio file to be transmitted to the audio rendering device for playback through the selected loudspeaker.

A capture operation 306 records sound waves picked up by the microphone, including sound generated by the loudspeaker correlated to the sample audio file. The sound waves are transduced by the microphone into analog signals, which are further transformed by the audio capture module into a digital audio format. The sample audio file is also accessed by the signal processor and transformed into a data format that can be easily compared with the format of the captured audio data in a transform operation 308. For example, if the captured audio data is in PMC format and the sample audio file is in WAV format, the sample audio file may be converted from WAV to PMC. In an alternative operation (not depicted in Fig. 3) the captured audio data may be converted by the signal processor to the format of the sample audio file. In yet another alternative operation (not depicted in Fig. 3) the data formats of both the captured audio data and the sample audio file may be converted to a third, common format.

Once the sample audio file and the captured audio data are in a common format, a first analysis operation 310 analyzes the frequency range and energy level of the audio signal corresponding to the transformed sample file. A second analysis operation 312 similarly analyzes the frequency range and energy level of the audio signal corresponding to the captured audio data. The second analysis operation 312 may analyze windows or snapshots of the captured audio data on a continuous basis to aid a correlation operation 314.

The correlation operation 314 idenfifies reasonable correlations between the frequency range and energy level for each window of the captured audio signal and the frequency range and energy level for the transformed sample file to ensure correlated audio data is compared in the quality determination process. In other words, the correlation process attempts to identify the portion of the captured audio signal that is the recording of the sample audio file played by the loudspeaker. The frequency range and energy level of the audio signals need not be identical, but merely reasonably close. A threshold or range of value differences considered reasonably close may be predetermined or user-settable. The correlation operation 314 may narrow the windows of the captured audio signal reviewed for correlation by selecting windows from a particular period of time that corresponds to the period of time during which the sample audio file was played by the loudspeaker.

Once a correlation between the captured audio signal and the sample audio file is identified, a computing operation 316 computes an audio quality score for the audio device configuration, e.g., for a particular microphone/loudspeaker combination. The audio quality score is based upon factors of fidelity between the audio qualities of an audio signal generated by the sample audio file and the audio signal captured by the microphone. Fidelity factors may include the comparative energy between the audio signals, similarities in frequency range, signal distortion, and the signal-to-noise ratio. An exemplary computing operation is described in greater detail herein with respect to Fig. 3.

A query operation 318 may automatically determine whether additional device configurations are possible. If so, the computer system returns to the selection operation 302 to select an alternate configuration of microphone and loudspeaker for quality analysis. The computer system identifies each functional, attached loudspeaker and microphone device and iterates through each possible pairing of microphone and loudspeaker to perform the quality testing process enumerated in Fig. 3.

Alternatively, the query operation 318 may ask the user through a GUI message whether the user would like to determine the quality of other device configurations. If so, the computer system returns to the selection operation 302 to select an alternate configuration of microphone and loudspeaker for quality analysis. If the user does not wish to determine the quality of other device configurations or the computer system automatically determines that no other configurations are possible, a presentation/selection operation 320 either presents the audio quality scores of each device configuration analyzed to the user (e.g., through a GUI message), automatically selects the best device configuration based upon a comparison of the audio quality scores, or both.

An exemplary process for calculating a quality score for an audio device configuration is depicted in Fig. 4. These operations may occur, for example, within the signal correlation and quality measurement module 218 of the quality detection module 212 in the computer system 200 of Fig. 2. As shown in Fig. 4, a reception operation 402 receives the captured audio signal data from the microphone via the audio capture module and the signal processor. The captured audio signal data is analyzed in a first determination operation 404, wherein volume characteristics of the captured audio signal, for example, volume intensity, signal-to-noise ratio, dynamic range, and total harmonic distortion, are measured. Next, a second determination operation 406 examines the frequency characteristics of the captured audio signal, for example, the frequency range (e.g., highest and lowest frequencies present in the captured audio signal), frequency composition (e.g., distinct frequencies present in the captured audio signal), and intensity (e.g., strength of the captured audio signal at particular frequencies).

Once the volume and frequency characteristics of the captured audio signal are determined, they are correlated with the corresponding volume and frequency characteristics of the sample audio file in a correlation operation 408. The same volume and frequency analysis may be performed with respect to a sample audio signal corresponding to the sample audio file contemporaneously with the analysis of the captured audio signal in order to provide values for the correlation operation. Alternatively, because the sample audio file is preselected and known, the volume and frequency characteristics for the sample audio file may merely be data saved in memory and available for use in the comparison operation. The correlated data is then analyzed for fidelity between the captured audio signal and the sample audio file in a calculation operation 410.

In the calculation operation 410, a "least squares" method may be used to determine the relative fidelity between the original signal of the sample audio file and the captured audio signal. The least squares approach is a mathematical optimization technique that attempts to find a "best fit" between a set of data, in this case the captured audio signal, and a predicted value, in this case the sample audio file, by attempting to minimize the sum of the squares of the differences (called residuals) between the data and the predicted value. The fidelity of the captured audio signal is impacted by the quality of audio configuration, for example, the frequency response of each of the loudspeaker and the microphone, the sensitivity of the microphone, the volume of the loudspeaker, the physical placement of the microphone and loudspeaker with respect to each other, the physical environment in which the audio devices are located, and the ambient noise.

A value corresponding to the least squares difference in fidelity for each of the volume and frequency characteristics determined and compared is then computed in a computation operation 412 and is considered the audio quality score for the particular audio device configuration. Each characteristic can further be assigned or scaled by a different weight based upon the importance of the contribution of the particular characteristic to audio quality. This audio quality score is saved and compared to the audio quality scores for other available audio device configurations, and the configuration with the best audio quality score may be automatically selected or recommended to the user for operation in the computer system for the communication session or with respect to a particular audio application.

Alternatively, or in addition, a top set of audio configurations corresponding to the highest audio quality scores may be presented. Further, feedback could be presented to a user indicating that certain audio device configurations are best suited to particular environments or with particular users. For example, one audio device configuration may be well suited for use outdoors while another is better suited for use when the computing device in located in a small area. As another example, one audio device configuration may be better suited to a female voice that generates sound in a higher frequency range, while another configuration may be better for a male voice that generates sounds in a lower frequency range.

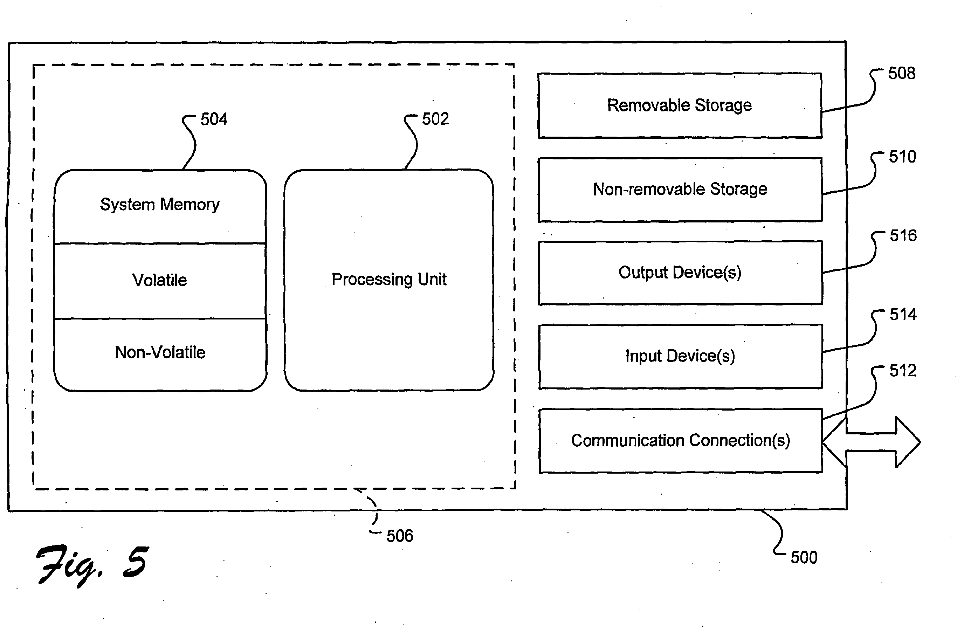

Fig. 5 illustrates an exemplary computer system 500 that may be used to conduct real-time communication sessions over a network and in which the quality measurement technology described herein may operate. In one implementation, the computer system 500 may be embodied by a desktop or laptop computer, although other implementations, for example, video game consoles, set top boxes, portable gaming systems, personal digital assistants, and mobile phones may incorporate the described technology. The computer system 500 typically includes at least one processing unit 502 and memory 504. Depending upon the exact configuration and type of the computer system 500, the memory 504 may be volatile (e.g., RAM), non-volatile (e.g., ROM and flash memory), or some combination of both. The most basic configuration of the computer system 500 need include only the processing unit 502 and the memory 504 as indicated by the dashed line 506.

The computer system 500 may further include additional devices for memory storage or retrieval. These devices may be removable storage devices 508 or non-removable storage devices 510, for example, magnetic disk drives, magnetic tape drives, and optical drives for memory storage and retrieval on magnetic and optical media. Storage media may include volatile and nonvolatile media, both removable and non-removable, and may be provided in any of a number of configurations, for example, RAM, ROM, EEPROM, flash memory, CD-ROM, DVD, or other optical storage medium, magnetic cassettes, magnetic tape, magnetic disk, or other magnetic storage device, or any other memory technology or medium that can be used to store data and can be accessed by the processing unit 502. Information may be stored on the storage media using any method or technology for storage of data, for example, computer readable instructions, data structures, and program modules.

The computer system 500 may also have one or more communication interfaces 512 that allow the system 500 to communicate with other devices. The communication interface 512 may be connected with a local area network (LAN), a wide area network (WAN), a telephony network, a cable network, the Internet, a direct wired connection, a wireless network, e.g., radio frequency, infrared, microwave, or acoustic, or other networks enabling the transfer of data between devices. Data is generally transmitted to and from the communication interface 512 over the network via a modulated data signal, e.g., a carrier wave or other transport medium. A modulated data signal is an electromagnetic signal with characteristics that can be set or changed in such a manner as to encode data within the signal.

The computer system 500 may further have a variety of input devices 514 and output devices 516. Exemplary input devices 514 may include a keyboard, a mouse, a tablet, a touch screen device, a scanner, a visual input device, and a microphone or other sound input device. Exemplary output devices 516 may include a display monitor, a printer, and speakers. Such input devices 514 and output devices 516 may be integrated with the computer system 500 or they may be connected to the computer system 500 via wires or wirelessly, e.g., via a Bluetooth protocol. These integrated or peripheral input and output devices are generally well known and are not further discussed herein. In one implementation, program instructions implementing the methods or the modules for determining audio quality, including, for example, the sample audio file, are embodied in the memory 504 and storage devices 508 and 510 and executed by processing unit 502. Other functions, for example, as performed by the audio rendering module and the audio capture module, may be performed by an operating system in the nonvolatile memory 504 of the computer system 500.

The technology described herein is implemented as logical operations and/or modules in one or more systems. The logical operations may be implemented as a sequence of processor-implemented steps executing in one or more computer systems and as interconnected machine or circuit modules within one or more computer systems. Likewise, the descriptions of various component modules may be provided in terms of operations executed or effected by the modules. The resulting implementation is a matter of choice, dependent on the performance requirements of the underlying system implementing the described technology. Accordingly, the logical operations making up the embodiments of the technology described herein are referred to variously as operations, steps, objects, or modules. Furthermore, it should be understood that logical operations may be performed in any order, unless explicitly claimed otherwise or a specific order is inherently necessitated by the claim language.

The above specification, examples and data provide a complete description of the structure and use of exemplary embodiments of the invention. Although various embodiments of the invention have been described above with a certain degree of particularity, or with reference to one or more individual embodiments, those skilled in the art could make numerous alterations to the disclosed embodiments without departing from the scope of this invention as defined by the appended claims. Other embodiments are therefore contemplated. It is intended that all matter contained in the above description and shown in the accompanying drawings shall be interpreted as illustrative only of particular embodiments and not limiting. Changes in detail or structure may be made without departing from the basic elements of the invention as defined in the following claims.

## Claims

1. A method for determining the quality of an audio device configuration comprising a microphone (202) and a loudspeaker (204) connected with a computer system (200, 500), wherein either the loudspeaker (204) comprises a plurality of loudspeakers, the microphone (202) comprises a plurality of microphones, or both, thus introducing a plurality of audio device configurations, the method comprising:
iterating (318) through following operations for each of the plurality of audio device configurations:
outputting (304) a sample sound via the loudspeaker (204) generated from a sample audio file (214) stored in a memory (504) of the computer system (200, 500);
capturing (306) the sample sound via the microphone (202) to produce a captured audio signal;
analyzing (312) audio characteristics of the captured audio signal;
correlating (314) the audio characteristics of the captured audio signal to known characteristics of a sample audio signal corresponding to the sample audio file; and
computing (316) a quality measurement value based on the correlated audio characteristics corresponding to the audio device configuration; and
selecting (320) one of the plurality of audio device configurations having a highest quality measurement value of the quality measurement values of each of the plurality of audio device configurations.

2. The method of claim 1, further comprising transforming (308) the sample sound captured by the microphone into a captured audio signal.

3. The method of claim 1, further comprising presenting (320) an indication to a user of the computer system of the quality measurement value.

4. The method of claim 1, wherein the analyzing operation further comprises processing at least one of the sample audio signal and the captured audio signal to transform the sample audio signal, the captured audio signal, or both into a common format (308).

5. The method of claim 1, wherein the analyzing operation further comprises analyzing at least one of a frequency range and an energy level of the captured audio signal (312).

6. The method of claim 1, wherein the computing operation further comprises calculating a least squares value of the correlated audio characteristics (410).

7. The method of claim 1, wherein the computing operation further comprises applying a weighting factor to the correlated audio characteristics.

8. A computer-readable medium having computer-executable instructions for performing a computer process implementing the method of one of claims 1 to 7.

9. A method for determining the quality of an audio device configuration comprising a microphone (202) and a loudspeaker (204) connected with a computer system (200, 500), wherein either the loudspeaker (204) comprises a plurality of loudspeakers, the microphone (202) comprises a plurality of microphones, or both, thus introducing a plurality of audio device configurations, the method comprising:
iterating (318) through following operations for each of the plurality of audio device configurations:
outputting (304) a sample sound via the loudspeaker (204) generated from a sample audio file (214) stored in a memory (504) of the computer system (200, 500);
capturing (306, 402) the sample sound via the microphone to produce a captured audio signal;
determining volume characteristics of the captured audio signal (312, 404);
determining frequency characteristics of the captured audio signal (312, 406);
determining volume characteristics of a sample audio signal (310) corresponding to the sample audio file;
determining frequency characteristics of the sample audio signal (310); and
calculating a fidelity measurement of the audio device configuration (316) based upon a comparison of the volume characteristics and the frequency characteristics of the captured audio signal with the volume characteristics and the frequency characteristics of the sample audio signal, respectively; and
selecting (320) one of the plurality of audio device configurations having a highest fidelity measurement of the fidelity measurements of each of the plurality of audio device configurations.

10. The method of claim 9, wherein the volume characteristics comprise at least one of volume intensity, signal-to-noise ratio, dynamic range, and total harmonic distortion (404).

11. The method of claim 9, wherein the frequency characteristics comprise at least one of frequency range, frequency composition, and frequency intensity (406).

12. The method of claim 9, wherein the calculating operation further comprises applying a weighting factor to one or more of the frequency characteristics, the volume characteristics, or both.

13. The method of claim 9, wherein the calculating operation further comprises calculating (410) a least squares value between the volume characteristics and the frequency characteristics of the captured audio signal and the volume characteristics and the frequency characteristics of the sample audio signal, respectively.

14. A computer-readable medium having computer-executable instructions for performing a computer process implementing the method of one of claims 9 to 13.

15. A computer system (200, 500) for determining the quality of an audio device configuration, wherein either the loudspeaker (204) comprises a plurality of loudspeakers, the microphone (202) comprises a plurality of microphones, or both, thus introducing a plurality of audio device configurations, the computer system comprising:
a processor (502);
a memory (504) accessible by the processor (502) for storing a sample audio file (214);
a loudspeaker (204, 516) under control of the processor (502) and capable of outputting a sample sound generated from the sample audio file (214);
a microphone (202, 514) under control of the processor (502) and capable of receiving the sample sound to produce a captured audio signal, wherein the loudspeaker (204) and microphone (202) together comprise the audio device configuration; and
a quality detection module (218) under control of the processor (502) for accessing the sample audio file from the memory, generating a sample audio signal from the sample audio file, receiving the captured audio signal from the microphone, analyzing audio characteristics of the captured audio signal, correlating audio characteristics of the captured audio signal to known characteristics of the sample audio signal, and computing a quality measurement value based upon the correlated audio characteristics corresponding to the audio device configuration; and
a device selection module (224) adapted to automatically iterate through each audio device configuration for output of the sample sound and receipt of the sample sound, and to select one of the plurality of audio device configurations having a highest quality measurement value of the quality measurement values of each of the plurality of audio device configurations.

## Patentansprüche

1. Verfahren zum Feststellen der Qualität einer Audiogerätekonfiguration, umfassend ein Mikrofon (202) und einen Lautsprecher (204), die mit einem Computersystem (200, 500) verbunden sind, wobei entweder der Lautsprecher (204) eine Vielzahl von Lautsprechern umfasst, das Mikrofon (202) eine Vielzahl von Mikrofonen umfasst, oder beides, wodurch eine Vielzahl von Audiogerätekonfigurationen eingerichtet wird, wobei das Verfahren umfasst:
wiederholtes Durchlaufen (318) der folgenden Vorgänge für jede aus der Vielzahl von Audiovorrichtungskonfigurationen:
Ausgeben (304) eines Beispieltons über den Lautsprecher (204), der aus einer Beispielaudiodatei (214) erzeugt wird, die in einem Speicher (504) des Computersystems (200, 500) gespeichert ist;
Erfassen (306) des Beispieltons über das Mikrofon (202), um ein erfasstes Audiosignal zu erzeugen;
Analysieren (312) von Audioeigenschaften des erfassten Audiosignals;
Korrelieren (314) der Audioeigenschaften des erfassten Audiosignals mit bekannten Eigenschaften eines Beispielaudiosignals, das der Beispielaudiodatei entspricht; und
Berechnen (316) eines Qualitätsmesswertes auf der Basis der korrelierten Audioeigenschaften, die der Audiogerätekonfiguration entsprechen; und
Wählen (320) einer aus der Vielzahl von Audiogerätekonfigurationen, die einen höchsten Qualitätsmesswert der Qualitätsmesswerte jeder der Vielzahl von Audiogerätekonfigurationen haben.

2. Verfahren nach Anspruch 1, weiterhin umfassend das Umwandeln (308) des Beispieltons, der von dem Mikrofon erfasst wurde, in ein erfasstes Audiosignal.

3. Verfahren nach Anspruch 1, weiterhin umfassend das Darstellen (320) eines Hinweises auf den Qualitätsmesswert für einen Benutzer des Computersystems.

4. Verfahren nach Anspruch 1, bei dem der Analysiervorgang weiterhin das Verarbeiten des Beispielaudiosignals und/oder des erfassten Audiosignals umfasst, um das Beispielaudiosignal, das erfasste Audiosignal oder beide in ein gängiges Format (308) umzuwandeln.

5. Verfahren nach Anspruch 1, bei dem der Analysiervorgang weiterhin das Analysieren eines Frequenzbereiches und/oder eines Energiepegels des erfassten Audiosignals (312) umfasst.

6. Verfahren nach Anspruch 1, bei dem der Berechnungsvorgang weiterhin das Berechnen eines Kleinstquadratwertes der korrelierten Audioeigenschaften (410) umfasst.

7. Verfahren nach Anspruch 1, bei dem der Berechnungsvorgang weiterhin das Anwenden eines Gewichtungsfaktors auf die korrelierten Audioeigenschaften umfasst.

8. Computerlesbares Medium, das über von einem Computer ausführbare Anweisungen verfügt, um einen Computerablauf auszuführen, der das Verfahren nach einem der Ansprüche 1 bis 7 anwendet.

9. Verfahren zum Feststellen der Qualität einer Audiogerätekonfiguration, umfassend ein Mikrofon (202) und einen Lautsprecher (204), die mit einem Computersystem (200, 500) verbunden sind, wobei entweder der Lautsprecher (204) eine Vielzahl von Lautsprechern umfasst, das Mikrofon (202) eine Vielzahl von Mikrofonen umfasst, oder beides, wodurch eine Vielzahl von Audiogerätekonfigurationen eingerichtet wird, wobei das Verfahren umfasst:
wiederholtes Durchlaufen (318) der folgenden Vorgänge für jede aus der Vielzahl von Audiovorrichtungskonfigurationen:
Ausgeben (304) eines Beispieltons über den Lautsprecher (204), der aus einer Beispielaudiodatei (214) erzeugt wird, die in einem Speicher (504) des Computersystems (200, 500) gespeichert ist;
Erfassen (306, 402) des Beispieltons über das Mikrofon (202), um ein erfasstes Audiosignal zu erzeugen;
Bestimmen von Lautstärkeeigenschaften des erfassten Audiosignals (312, 404);
Bestimmen von Frequenzeigenschaften des erfassten Audiosignals (312, 406);
Bestimmen von Lautstärkeeigenschaften eines Beispielaudiosignals (310), das der Beispielaudiodatei entspricht;
Bestimmen von Frequenzeigenschaften des Beispielaudiosignals (310); und
Berechnen eines Treuemaßes der Audiogerätekonfiguration (316) auf der Basis eines Vergleiches der Lautstärkeeigenschaften und der Frequenzeigenschaften des erfassten Audiosignals mit den Lautstärkeeigenschaften bzw. den Frequenzeigenschaften des Beispielaudiosignals; und
Wählen (320) einer aus der Vielzahl von Audiogerätekonfigurationen, die ein höchstes Treuemaß der Treuemaße jeder aus der Vielzahl von Audiogrätekonfigurationen hat.

10. Verfahren nach Anspruch 9, bei dem die Lautstärkeeigenschaften eine Lautstärkeintensität und/oder einen Signalrauschabstand und/oder einen Dynamikbereich und/oder eine harmonische Gesamtverzerrung (404) umfassen.

11. Verfahren nach Anspruch 9, bei dem die Frequenzeigenschaften einen Frequenzbereich und/oder eine Frequenzzusammensetzung und/oder eine Frequenzintensität (406) umfassen.

12. Verfahren nach Anspruch 9, bei dem der Berechnungsvorgang weiterhin das Anwenden eines Gewichtungsfaktors auf die Frequenzeigenschaften, die Lautstärkeeigenschaften oder beides umfasst.

13. Verfahren nach Anspruch 9, bei dem der Berechnungsvorgang weiterhin das Berechnen (410) eines Kleinstquadratwertes zwischen den Lautstärkeeigenschaften und den Frequenzeigenschaften des erfassten Audiosignals und den Lautstärkeeigenschaften bzw. den Frequenzeigenschaften des Beispielaudiosignals umfasst.

14. Computerlesbares Medium, das über von einem Computer ausführbare Anweisungen zum Ausführen eines Computerablaufes verfügt, der das Verfahren nach einem der Ansprüche 9 bis 13 anwendet.

15. Computersystem (200, 500) zum Bestimmen der Qualität einer Audiogerätekonfiguration, bei der entweder der Lautsprecher (204) eine Vielzahl von Lautsprechern umfasst, das Mikrofon (202) eine Vielzahl von Mikrofonen umfasst, oder beides, wodurch eine Vielzahl von Audiogerätekonfigurationen eingerichtet wird, wobei das Computersystem umfasst:
einen Prozessor (502);
einen Speicher (504), auf den von dem Prozessor (502) zugegriffen werden kann, um eine Beispielaudiodatei (214) zu speichern;
einen Lautsprecher (204, 516) unter Steuerung des Prozessors (502) und in der Lage, einen Beispielton auszugeben, der aus der Beispielaudiodatei (214) erzeugt wird;
ein Mikrofon (202, 514) unter Steuerung des Prozessors (502) und in der Lage den Beispielton zu empfangen, um ein erfasstes Audiosignal zu erzeugen, wobei der Lautsprecher (204) und das Mikrofon (202) zusammen die Audiogerätekonfiguration umfassen; und
ein Qualitätserfassungsmodul (218) unter Steuerung des Prozessors (502) zum Zugreifen auf die Beispielaudiodatei von dem Speicher, zum Erzeugen eines Beispielaudiosignals aus der Beispielaudiodatei, zum Empfangen des erfassten Audiosignals von dem Mikrofon, zum Analysieren von Audioeigenschaften des erfassten Audiosignals, zum Korrelieren der Audioeigenschaften des erfassten Audiosignals mit bekannten Eigenschaften des Beispielaudiosignals und zum Berechnen eines Qualitätsmesswertes auf der Basis der korrelierten Audioeigenschaften entsprechend der Audiogerätekonfiguration; und
ein Geräteauswahlmodul (224), das dazu eingerichtet ist, automatisch jede Audiogerätekonfiguration wiederholt zu durchlaufen, um den Beispielton auszugeben und den Beispielton zu empfangen und eine aus der Vielzahl von Audiogerätekonfigurationen zu wählen, die einen höchsten Qualitätsmesswert aus der Vielzahl der Qualitätsmesswerte jeder aus der Vielzahl von Audiogerätekonfigurationen haben.

## Revendications

1. Procédé pour déterminer la qualité de la configuration d'un dispositif audio comprenant un microphone (202) et un haut-parleur (204) connectés à un système informatique (200, 500), pour lequel soit le haut-parleur (204) comprend une pluralité de haut-parleurs, soit le microphone (202) comprend une pluralité de microphones, soit les deux, introduisant ainsi une pluralité de configurations du dispositif audio, le procédé comprenant les étapes consistant à :
- itérer (318) les opérations suivantes pour chaque configuration de la pluralité de configurations du dispositif audio :
- délivrer en sortie (304) un échantillon de son via le haut-parleur (204), généré à partir d'un échantillon de fichier audio (214) stocké dans une mémoire (504) du système informatique (200, 500) ;
- capturer (306) l'échantillon de son via le microphone (202) pour produire un signal audio capturé ;
- analyser (312) les.caractéristiques audio du signal audio capturé ;
- corréler (314) les caractéristiques audio du signal audio capturé aux caractéristiques connues d'un échantillon de signal audio correspondant à l'échantillon de fichier audio ; et
- calculer (316) une valeur de mesure de qualité fondée sur les caractéristiques audio corrélées correspondant à la configuration du dispositif audio ; et
- sélectionner (320) une configuration de la pluralité de configurations du dispositif audio ayant la valeur de mesure de qualité la plus élevée des valeurs de mesure de qualité de chaque configuration de la pluralité de configurations du dispositif audio.

2. Procédé selon la revendication 1, comprenant en outre l'étape consistant à transformer (308) l'échantillon de son capturé par le microphone en un signal audio capturé.

3. Procédé selon la revendication 1, comprenant en outre l'étape consistant à présenter (320) une indication à un utilisateur du système informatique de la valeur de mesure de qualité.

4. Procédé selon la revendication 1, pour lequel l'opération d'analyse comprend en outre un traitement de l'échantillon de signal audio et/ou du signal audio capturé pour transformer l'échantillon de signal audio, le signal audio capturé ou les deux dans un format commun (308).

5. Procédé selon la revendication 1, pour lequel l'opération d'analyse comprend en outre une analyse d'une plage de fréquence et/ou d'un niveau d'énergie du signal audio capturé (312).

6. Procédé selon la revendication 1, pour lequel l'opération de calcul comprend en outre un calcul d'une valeur de moindres carrés des caractéristiques audio corrélées (410).

7. Procédé selon la revendication 1, pour lequel l'opération de calcul comprend en outre l'application d'un facteur de pondération aux caractéristiques audio corrélées.

8. Support lisible par ordinateur comportant des instructions exécutables par l'ordinateur pour effectuer un processus informatique mettant en oeuvre un procédé selon l'une des revendications 1 à 7.

9. Procédé pour déterminer la qualité de la configuration d'un dispositif audio comprenant un microphone (202) et un haut-parleur (204) connectés à un système informatique (200, 500), pour lequel soit le haut-parleur (204) comprend une pluralité de haut-parleurs, soit le microphone (202) comprend une pluralité de microphones, soit les deux, introduisant ainsi une pluralité de configurations du dispositif audio, le procédé comprenant les étapes consistant à :
- itérer (318) les opérations suivantes pour chaque configuration de la pluralité de configurations du dispositif audio :
- délivrer en sortie (304) un échantillon de son via le haut-parleur (204), généré à partir d'un échantillon de fichier audio (214) stocké dans une mémoire (504) du système informatique (200, 500) ;
- capturer (306, 402) l'échantillon de son via le microphone pour produire un signal audio capturé ;
- déterminer les caractéristiques de volume du signal audio capturé (312, 404) ;
- déterminer les caractéristiques de fréquence du signal audio capturé (312, 406) ;
- déterminer les caractéristiques de volume d'un échantillon de signal audio (310) correspondant à l'échantillon de fichier audio ;
- déterminer les caractéristiques de fréquence de l'échantillon de signal audio (310) ; et
- calculer une mesure de fidélité de la configuration du dispositif audio (316) fondée sur une comparaison des caractéristiques de volume et des caractéristiques de fréquence du signal audio capturé avec les caractéristiques de volume et les caractéristiques de fréquence de l'échantillon de signal audio, respectivement ; et
- sélectionner (320) une configuration de la pluralité de configurations du dispositif audio ayant la mesure de fidélité la plus élevée des mesures de fidélité de chaque configuration de la pluralité de configurations du dispositif audio.

10. Procédé selon la revendication 9, pour lequel les caractéristiques de volume comprennent soit une intensité du volume, soit un rapport signal/bruit, soit une plage dynamique, soit une distorsion harmonique totale (404), soit une quelconque combinaison de ces éléments.

11. Procédé selon la revendication 9, pour lequel les caractéristiques de fréquence comprennent soit une plage de fréquences, soit une composition fréquentielle, soit une intensité des fréquences (406), soit une quelconque combinaison de ces éléments.

12. Procédé selon la revendication 9, pour lequel l'opération de calcul comprend en outre l'application d'un facteur de pondération soit aux caractéristiques de fréquence, soit aux caractéristiques de volume, soit aux deux.

13. Procédé selon la revendication 9, pour lequel l'opération de calcul comprend en outre un calcul (410) d'une valeur de moindres carrés entre les caractéristiques de volume et les caractéristiques de fréquence du signal audio capturé et les caractéristiques de volume et les caractéristiques de fréquence de l'échantillon de signal audio, respectivement.

14. Support lisible par ordinateur comportant des instructions exécutables par l'ordinateur pour effectuer un processus informatique mettant en oeuvre un procédé selon l'une des revendications 9 à 13.

15. Système informatique (200, 500) pour déterminer la qualité de la configuration d'un dispositif audio, dans lequel soit le haut-parleur (204) comprend une pluralité de haut-parleurs, soit le microphone (202) comprend une pluralité de microphones, soit les deux, introduisant ainsi une pluralité de configurations du dispositif audio, le système informatique comprenant :
- un processeur (502) ;
- une mémoire (504) accessible par le processeur (502) pour stocker un échantillon de fichier audio (214) ;
- un haut-parleur (204, 516) sous la commande du processeur (502) et capable de délivrer en sortie un échantillon de son généré à partir de l'échantillon de fichier audio (214) ;
- un microphone (202, 514) sous la commande du processeur (502) et capable de recevoir l'échantillon de son pour produire un signal audio capturé, dans lequel le haut-parleur (204) et le microphone (202) constituent ensemble la configuration du dispositif audio ; et
- un module de détection de qualité (218) sous la commande du processeur (502) pour accéder à l'échantillon de fichier audio à partir de la mémoire, générer un échantillon de signal audio à partir de l'échantillon de fichier audio, recevoir le signal audio capturé par le microphone, analyser les caractéristiques audio du signal audio capturé, corréler les caractéristiques audio du signal audio capturé aux caractéristiques connues de l'échantillon de signal audio et calculer une valeur de mesure de qualité fondée sur les caractéristiques audio corrélées correspondant à la configuration du dispositif audio ; et
- un module de sélection de dispositif (224) adapté pour itérer automatiquement sur chaque configuration du dispositif audio pour délivrer en sortie l'échantillon de son et recevoir l'échantillon de son et pour sélectionner une configuration de la pluralité de configurations du dispositif audio ayant la valeur de mesure de qualité la plus élevée des valeurs de mesure de qualité de chaque configuration de la pluralité de configurations du dispositif audio.
